# FASCICULE DE BREVET EUROPEEN

(11) **EP 0 388 568 B1**
(45) Date de publication et mention de la délivrance du brevet: **26.10.1994**
(21) Numéro de dépôt: 89403673.0
(22) Date de dépôt: 28.12.1989
(51) Int. Cl.: G01T 7/00, E02F 9/26

(54) **Dispositif de mesure de la radioactivité d'une charge de minerai sur un engin d'extraction tel qu'une pelle à godet**
Schaltung zur Messung der Radioaktivität von Mineralien auf einer Fördermaschine, wie zum Beispiel einem Schaufelbagger
Arrangement for measuring the radioactivity of mineral load on an extraction machine, for instance a shovel dredger

(30) Priorité: 30.12.1988 FR 8817481
(43) Date de publication de la demande: 26.09.1990
(73) Titulaire: COMPAGNIE FRANCAISE DE MOKTA, F-78143 Velizy-Villacoublay Cédex (FR)
(72) Inventeur: Rouillon, Christian, F-45130 Meung sur Loire (FR)
(74) Mandataire: Warcoin, Jacques

(56) Documents cités:
- BE-A- 678 321
- FR-A- 1 150 345
- US-A- 4 135 632
- PATENT ABSTRACTS OF JAPAN, vol. 10, no. 62 (M-460)[2119], 12 mars 1986;& JP-A-60 208 526

## Description

La présente invention a trait d'une façon générale au domaine de l'exploitation de minerais radioactifs, et concerne plus particulièrement un nouveau dispositif de mesure de radioactivité monté sur engin d'exploitation minière procédant à l'extraction des minerais radioactifs.

Sur un site d'exploitation de minerais radioactifs, il est bien connu d'effectuer à un moment ou à un autre du processus une mesure de teneur par l'intermédiaire de la radioactivité du minerai extrait. Une telle mesure permet principalement de trier le minerai pour l'affecter à des catégories de richesses différentes, et pour éliminer les minerais considérés comme trop pauvres ou encore des stériles, et permet également, par totalisation des mesures effectuées, de donner une indication de la production du site sur une période de temps donnée. Globalement, de telles mesures permettent d'optimiser l'exploitation d'une carrière.

Les dispositifs de mesure connus comprennent généralement un portique radiométrique, dimensionné pour que des camions à bennes ou autres engins de transport puissent passer sous celui-ci et colportant une ou plusieurs traverses supérieures sur lesquelles sont montés un certain nombre de détecteurs de radioactivité. Il peut s'agir par exemple de tubes Geiger-Muller ou encore de scintillateurs à monocristal, aptes à détecter les rayons γ émis par le chargement et reliés à une échelle de comptage appropriée. Après une durée d'exposition prédéterminée, par exemple de l'ordre de quelques secondes, l'échelle de comptage donne une indication de la teneur en éléments radioactifs du minerai contenu dans la benne de l'engin.

Les portiques radiométriques présentent cependant un certain nombre d'inconvénients.

En premier lieu, la mesure obtenue de la radioactivité est extrêmement imprécise. En effet, il a été constaté que, sur une masse de minerai de plusieurs dizaines de tonnes amassées dans une benne de camion, seuls les rayons γ émanant de la couche superficielle du minerai, d'une épaisseur de l'ordre de 60 cm, étaient susceptibles de sortir de cette masse et d'atteindre les détecteurs en haut du portique. L'on comprend que les erreurs de mesure, dans le cas concret où la masse de minerai dans la benne n'est pas homogène, peuvent être considérables.

En outre, l'étalonnage d'un dispositif de mesure de radioactivité, quel qu'il soit, nécessite des campagnes d'échantillonnage très lourdes et coûteuses. Par exemple, dans le cas d'un portique radiométrique, il est nécessaire de traiter lors d'une telle campagne, une trentaine de charges de bennes, d'un poids de 25 à 30 tonnes chacune, pour obtenir la courbe statistique radioactivité/teneur en minerai nécessaire pour l'utilisation concrète du portique.

Enfin, les portiques radiométriques sont coûteux, et il en résulte qu'ils sont prévus dans les carrières en un nombre très souvent insuffisant. Cela se traduit en pratique par la présence de files d'attente de camions ou autres engins devant passer sous le portique, au détriment de la productivité.

On a cherché depuis longtemps en vain à adapter sur des pelles à godet, chargées de l'extraction du minerai, des dispositifs de mesure de radioactivité de la charge de minerai contenue dans le godet. Mais ces tentatives se sont soldées par des échecs. Plus précisément, les détecteurs de rayonnement γ disponibles sont tous d'une constitution relativement fragile, et ne supportent pas les conditions de travail toujours difficiles qui prévalent dans l'environnement d'une pelle hydraulique ou autre engin comparable.

En conséquence, les recherches dirigées vers ce type de mesure sont maintenant abandonnées.

La Demanderesse, allant à l'encontre de cette tendance de la technique, a néanmoins cherché à développer un dispositif de mesure sur engin qui soit opérationnel dans l'environnement difficile d'une carrière. Ces recherches ont abouti à la présente invention.

Celle-ci concerne ainsi un engin d'extraction de minerai radioactif ayant les particularités de la revendication 1.

Des aspects préférés, mais non limitatifs, de l'engin selon l'invention sont exposés dans les revendications dépendantes.

Des avantages du dispositif de mesure de la présente invention sont les suivants :
- l'élimination des stériles francs et des minerais pauvres, dont la teneur est inférieure à la limite économique d'exploitabilité, est rationalisée en ce qu'elle s'effectue sur des lots beaucoup plus petits que dans l'art antérieur, et en outre avant leur chargement sur camion.
- la séparation des minerais en catégories de teneurs différentes est à la fois plus souple et plus précise; la régulation de l'alimentation des installations de traitement ultérieur, ainsi que l'affectation à des traitements différents, en sont facilitées.
- l'obtention de la teneur pour chaque charge de godet (quelques m³) permet une comptabilisation beaucoup plus précise de la production, et par voie de conséquence une optimisation de celle-ci.
- la main d'oeuvre est économisée, et le conducteur de l'engin peut opérer d'une façon plus indépendante du contrôleur géologique, et donc sans pertes de temps.
- Enfin et surtout, comme on l'a indiqué plus haut, les campagnes d'échantillonnage, beaucoup plus légères, peuvent être conduites avec une plus grande rigueur, du fait du volume réduit de l'échantillon.

La présente invention permet finalement de supprimer totalement les portiques de la technique antérieure.

D'autres aspects, buts et avantages de la présente invention apparaitront mieux a la lecture de la description détaillée suivante d'une forme de réalisation préférée de celle-ci, donnée à titre d'exemple et faite en référence aux dessins annexés, sur lesquels :
- la figure 1 est une vue en élévation de côté schématique d'un dispositif de mesure selon la présente invention, illustrant le principe de base de celle-ci,
- la figure 2 est une vue en élévation de côté d'un premier détail du dispositif de la figure 1,
- la figure 3 est une vue de dessous du détail de la figure 2,
- la figure 4 est une vue en élévation de côté d'un second détail du dispositif de la figure 1,
- la figure 5 est une vue de dessous du détail de la figure 4,
- la figure 6 est une vue en coupe transversale du détail des figures 4 et 5, et
- la figure 7 est une vue en coupe transversale d'un détail, prise selon la ligne VII-VII de la figure 1.

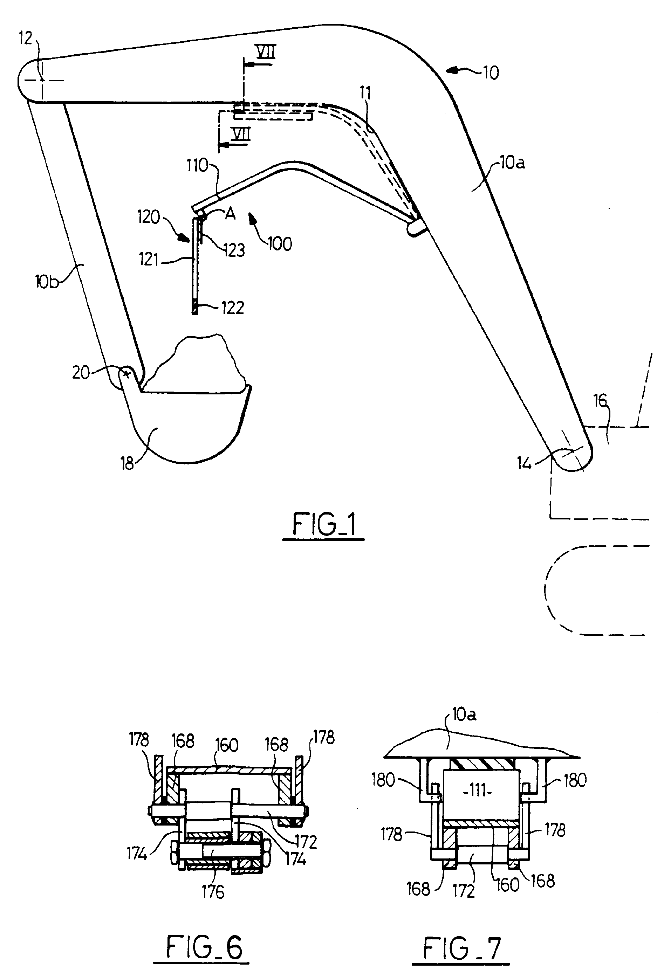

En référence tout d'abord à la figure 1, on y a représenté le double bras 10 d'une pelle hydraulique de type "rétro", qui se décompose classiquement en deux parties 10a et 10b. Les bras 10a et 10b sont articulés l'un à l'autre en 12. Le bras principal 10a est en outre articulé sur le chassis 16 de la pelle en 14. La pelle comprend en outre un godet 18 articulé à l'extrémité inférieure du bras 10b en 20.

Des vérins hydrauliques (non représentés) sont classiquement prévus pour commander les divers mouvements des bras et du godet.

Selon la présente invention, il est monté sur le bras principal 10a de la pelle un dispositif de mesure de radioactivité globalement désigné par la référence 100.

Ce dispositif se compose pour l'essentiel d'un bras 110 articulé par une extrémité sur la face inférieure du bras 10a de la pelle et d'une sonde en forme de tige 120 montée à l'extrémité libre du bras 110. Conformément à un aspect essentiel de l'invention, la sonde est montée à l'extrémité du bras selon une liaison articulée, de manière pendulaire. La partie sonde 120 se compose d'un tube 121 de longueur bien déterminée, dans la région de l'extrémité inférieure duquel est logé un détecteur 122 de rayonnement radioactif, de préférence de rayonnement γ.

Le tube 121 est articulé par l'intermédiaire d'une pièce de montage 123 à l'extrémité libre du bras 110, selon un axe A perpendiculaire au plan de la feuille de dessin représentant la figure 1. Le tube 121 tient lieu d'entretoise entre cette articulation A et le détecteur 122, de manière à ce que ce dernier soit situé à une distance déterminée au-dessus du godet 18, qui est lui-même amené par le circuit hydraulique de l'engin dans une position et une orientation bien déterminées à chaque fois qu'une mesure de radioactivité doit être effectuée.

Ainsi, le détecteur 122, pendant librement à l'extrémité du bras 110 dans un plan perpendiculaire à l'axe A, est bien protégé contre les chocs qu'il peut subir en ce sens qu'il est libre de se dégager, vers la gauche ou vers la droite sur la figure 1, pour revenir ensuite, sous l'effet de la gravité, jusque dans sa position verticale d'équilibre illustrée. Il est important de noter ici que la liaison articulée entre le bras 110, relié essentiellement rigidement à l'engin, et la sonde 120, permet d'amortir de nombreuses vibrations régnant dans ledit engin pendant son fonctionnement.

Le détecteur de rayonnement γ, réputé fragile, présente ainsi une immunité remarquable par rapport à l'environnement extérieur, et c'est le montage décrit ci-dessus qui a permis d'effectuer pour la première fois de façon industriellement exploitable une radiométrie sur charge de godet.

Dans la pratique, des essais ont permis de démontrer cette exploitabilité, sans défaillance et sur une durée prolongée.

De préférence, le détecteur γ 122 utilisé est un scintillateur monocristal minéral ICs (TL) associé à une photodiode au silicium triée, reliée de façon connue à un préamplificateur de charge (non représenté), dont la sortie est connectée par un câble 123 à un système de comptage approprié (non représenté), situé par exemple dans la cabine de conduite de la pelle. Un tel type de détecteur est avantageux en ce qu'étant à l'état solide, il ne présente qu'un très faible encombrement, typiquement de quelques cm³.

Le système de comptage est de préférence une échelle de comptage numérique, choisie avec des qualités appropriées de robustesse, d'autonomie, de portativité, de légèreté et de compacité. Cette échelle peut être conçue pour mémoriser les mesures effectuées en association avec des identificateurs, et pour les transférer ultérieurement en série vers un micro-ordinateur de traitement.

En variante ou additionnellement, il est possible de prévoir sur la pelle, par exemple sur le toît de la cabine, un dispositif d'affichage de grandes dimensions indiquant à chaque mesure de charge de godet la radioactivité τ mesurée. De cette manière, l'échantillonneur en charge des opérations sera informé à tout instant de la catégorie de minerai extraite, pour aiguiller chaque charge de godet vers une destination appropriée.

En principe, un détecteur γ du type décrit ci-dessus sera utilisé pour des minerais des teneurs en Uranium 238 de l'ordre de 300 à 1000 ppm, avec un godet de 2600 l.

Si l'on souhaite mesurer des teneurs supérieures, lors de l'exploitation de gisements plus riches, il est bien entendu possible de remplacer ce type de détecteur par un autre, et en particulier par un détecteur de type Geiger-Müller. Un détecteur de type scintillon peut encore être utilisé.

De préférence, le détecteur présente un angle solide de détection de l'ordre de π (cône de révolution d'angle au sommet de 120°), l'axe de la détection étant dirigé verticalement vers le bas, et le dispositif est alors conçu pour venir se positionner immédiatement au-dessus de la charge contenue dans le godet, comme illustré sur la figure 1. En variante, il est bien entendu possible de prévoir une détecteur opérant sur un angle solide de 4π, le dispositif étant alors conçu pour que la tige 120 pénètre partiellement dans la masse du minerai, pour que le détecteur soit situé au coeur de celui-ci.

Comme on peut l'observer sur la figure 1, l'ensemble de détection 100 peut prendre une position active (traits pleins) et une position repliée contre la surface inférieure du bras de pelle 10a (traits tiretés).

A cet effet, le bras 110 présente un profil comportant une courbure locale qui lui permet d'épouser le profil de ladite surface inférieure, et la sonde 120 peut être repliée (dans le sens inverse de celui des aiguilles d'une montre sur la figure 1) contre la section rectiligne du bras 110 adjacente à son extrémité libre.

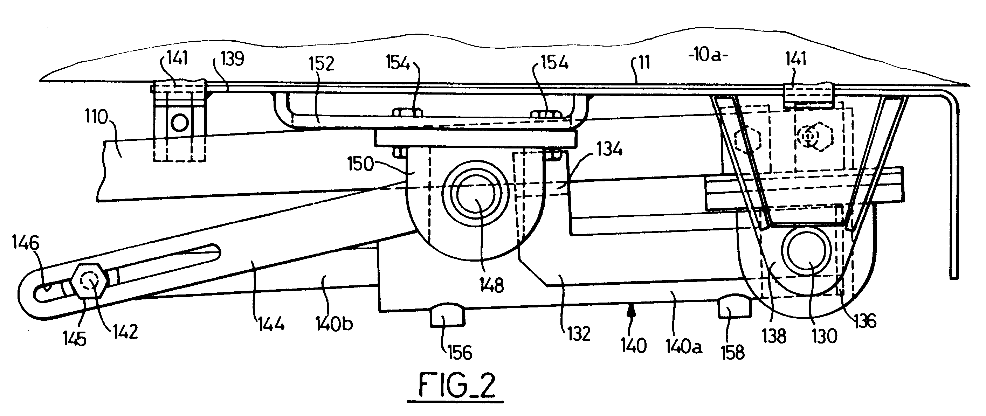

On va maintenant décrire en détail en référence aux figures 2 à 7 un exemple de réalisation des moyens mécaniques mis en oeuvre pour effectuer les divers mouvements du dispositif de mesure de l'invention.

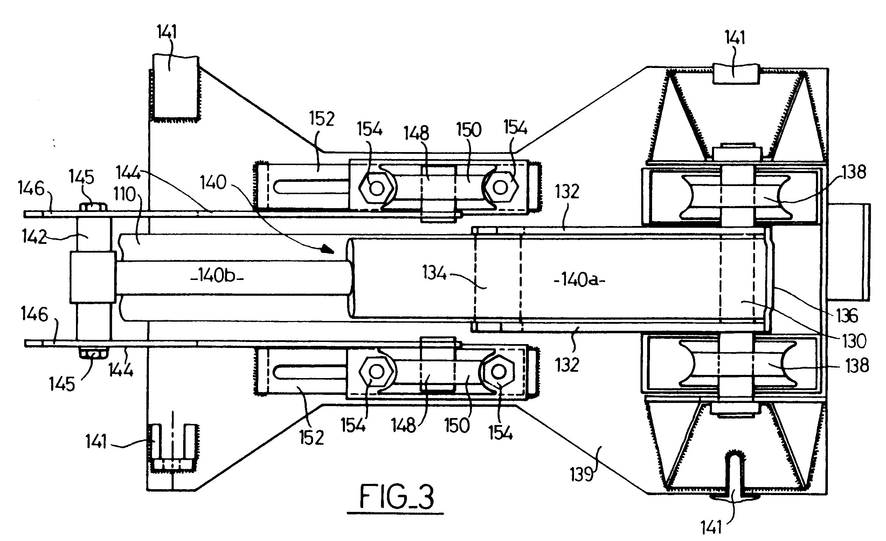

Sur les figures 2 et 3 est illustré le mécanisme de connexion du bras 110 au bras de pelle 10a et d'entraînement du bras 110.

L'extrémité du bras 110 opposée à la sonde 120 est reliée à un axe d'articulation horizontal transversal 130 par l'intermédiaire de pièces de liaison 132, 134 et 136. L'axe 130 est monté dans deux paliers 138 reliés rigidement à la surface inférieure 11 du bras de pelle 10a par exemple par soudage sur une plaque de support 139 elle-même fixée de façon amovible sur le bras de pelle 10a par l'intermédiaire de deux dispositifs de fixation appropriés 141, par exemple du genre à mâchoires serrables.

Un premier vérin hydraulique 140 est monté pivotant par une première extrémité, côté enveloppe 140a, sur l'axe sus-mentionné 130, en étant rendu solidaire en rotation avec le bras 110 dans la région de l'axe 130 par des pièces mécaniques non détaillées. L'extrémité libre de la tige 140b du vérin 140 est montée pivotante, par l'intermédiaire d'un axe 142, dans des fentes longitudinales 146 de deux biellettes 144. Des écrous 145 permettent d'immobiliser l'axe 142 en une position déterminée dans la direction longitudinale des fentes 146. Les biellettes s'étendent de part et d'autre du bras 110 et, à leur extrémité respective opposée à la fente 146, sont montées pivotantes sur deux axes 148 logés dans deux paliers 150 montés rigidement sur la plaque de support 139 en avant de l'axe 130.

La position des axes 148 le long de la surface inférieure 11 est réglable, et il est prévu à cet effet deux glissières 152 soudées à la plaque 139 et dans lesquelles les paliers 150 peuvent coulisser et être immobilisés en une position choisie à l'aide de boulons 154.

Le premier vérin 140 est alimenté avantageusement, en 156 et 158, par le circuit hydraulique de la pelle.

La possibilité de réglage du point de pivotement de la tige 140b du vérin par rapport aux biellettes 144 et desdites biellettes 144 par rapport au bras de pelle 10a permet avantageusement de modifier les positions angulaires de rangement et de dégagement maximal du bras 110, respectivement, par rapport au bras de pelle 10a, qui va elle-même déterminer la hauteur de la sonde 120 au dessus du godet dont la charge est à analyser.

Ce mécanisme opère de la façon suivante : dans la position illustrée, la tige 140b du vérin présente son extension maximale, si bien que les biellettes et le vérin prennent, par le jeu des diverses articulations, la position illustrée sur la figure 2. Ainsi, le vérin 140, et par conséquent la section adjacente du bras 110 du dispositif de mesure, sont sensiblement parallèles à la surface inférieure 11 du bras de pelle, ce qui correspond à la position de rangement (position en tiretés de la figure 1).

Lorsque la tige du vérin est rétractée, ce mouvement s'accompagne nécessairement d'un pivotement du vérin autour de l'axe 130 et des biellettes autour des axes 148 dans le sens inverse de celui des aiguilles d'une montre, avec en corollaire un accroissement de l'angle que font ces deux pièces. Le pivotement du vérin 140 entraîne un pivotement du bras 110 dans le même sens et selon le même angle, jusqu'à ce que, pour le retrait maximal de la tige 140b, le bras 110 prenne sa position de dégagement maximal, qui est la position dans laquelle la mesure peut être effectuée.

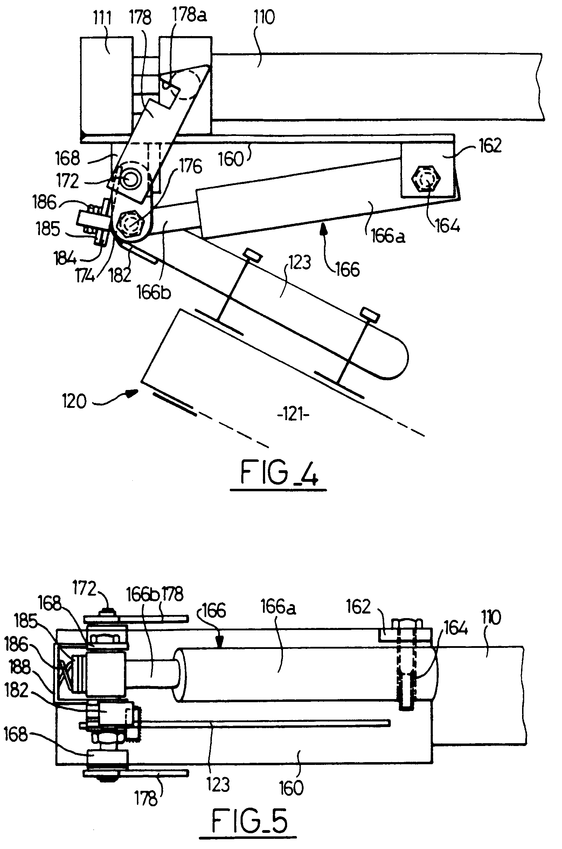

Sur les figures 4 à 7 est illustré le mécanisme prévu pour la connexion de la sonde 120 à l'extrémité libre du bras 110 et pour l'entraînement de ladite sonde.

Tout d'abord, la longueur du bras 110 peut être modifiée, et il comprend à cet effet un prolongement téléscopique 111. On peut ainsi ajuster la position de la sonde 120 pour qu'elle soit parfaitement à l'aplomb de la charge de minerai à analyser. Sur le prolongement 111 est soudée une plaque 160 s'étendant vers l'arrière (vers la droite sur la figure 4) sensiblement parallèlement à la section adjacente du bras 110. A l'extrémité arrière de la plaque 160 est prévu un palier 162 dans lequel est fixé un axe d'articulation 164 pour l'enveloppe 166a d'un second vérin hydraulique 166, alimenté de préférence par le circuit hydraulique de l'engin. Par ailleurs, la plaque 160 comporte dans la région de son extrémité avant deux paliers 168 soudés sur celle-ci et recevant un axe d'articulation 172. Sur cet axe sont montées pivotantes deux biellettes courtes 174 qui, à leur extrémité inférieure, portent un autre axe d'articulation 176 passant par deux trous ménagés dans celles-ci.

En outre, deux crochets 178 sont montées rigidement sur l'axe 172, à des fins expliquées plus loin. Les crochets 178 comportent chacun une encoche 178a apte à recevoir, dans une certaine position, une tige de verrouillage respective 180 (voir figure 7) soudée sur la surface inférieure 11 du bras de pelle 10a dans la région de celle-ci située en surplomb.

La tige 166b du vérin 166 est articulée à son extrémité libre sur l'axe 176. Sur ce même axe est montée librement pivotante, par une première extrémité, la pièce de support 123 pour la sonde 120. Cette pièce 123 comporte des attaches, par exemple des colliers de serrage ou analogues, pour y fixer le tube 121 de la sonde 120.

Sur les biellettes courtes 174 est fixée, par exemple par soudage, une plaque de retenue 182 sur laquelle peut venir s'appuyer, par gravité, la pièce 123.

Enfin, une plaque de poussée 184 est soudée sur l'axe 172 et s'étend dans le prolongement de la tige 166b du vérin. Cette plaque, qui peut pivoter avec l'axe 172, est sollicitée, par l'intermédiaire d'une rondelle 185, par un ressort 186 situé du côté opposé à l'articulation 176, qui s'appuie au fond d'un berceau 188 (voir figure 5) retenu par l'axe 176. La plaque 184 et les crochets 178 décrits plus haut occupent une position angulaire bien déterminée l'un par rapport à l'autre.

Le fonctionnement de ce mécanisme est le suivant. Précisons tout d'abord que, dans la position illustrée sur la figure 4, le vérin 166 est dans une position intermédiaire.

Lorsque, à partir de la position complètement rétractée du vérin 166, dans laquelle la sonde 120 est repliée contre la section adjacente du bras 110 et les tiges de verrouillage 180 sont engagées dans les encoches 178a des crochets 178, celui-ci est déployé, l'extrémité libre de sa tige 166b exerce initialement sur la plaque 184 une poussée qui, en surmontant la force du ressort 186, va faire pivoter l'axe 172, et donc les deux crochets 178, dans le sens des aiguilles d'une montre, sur un angle suffisant pour que les encoches libèrent les tiges de verrouillage 180. Le dispositif de mesure est ainsi libéré de sa position de rangement.

La poursuite du déplacement de la tige du vérin provoque le pivotement des biellettes courtes 174, et donc de la plaque de retenue 182, dans le sens des aiguilles d'une montre. La pièce 123 et la sonde 120 suivent également ce mouvement, par gravité, et la commande du vérin est prolongée jusqu'à ce que la sonde 120 atteigne la position verticale permettant d'effectuer la mesure.

La course du vérin 166 est réglée de telle sorte que la plaque de retenue 182 pivote suffisamment au delà de la verticale pour que la sonde présente le débattement requis dans un sens ou dans l'autre, afin d'une part de minimiser les contraintes qu'elle subit en cas de choc, et d'autre part d'absorber dans l'articulation 176 certaines vibrations régnant dans l'engin.

Ainsi, à la fin du déploiement du vérin, la sonde 120 est attachée au bras 110 selon une liaison pendulaire, et se stabilise par gravité en position verticale pour effectuer la mesure de radioactivité.

Pour effectuer le rangement du dispositif de mesure, le vérin 166 est rétracté, et les opérations ci-dessus s'effectuent en inverse, avec pour terminer le verrouillage de l'ensemble du dispositif à l'aide des crochets 178.

On va maintenant décrire en détail un cycle de mesure de radioactivité avec le dispositif de l'invention.

Tout d'abord, un interrupteur de descente prévu dans la cabine du pelliste est manoeuvré. Cette manoeuvre provoque initialement le déploiement du vérin 166 et le décrochage du bras 110 du dispositif par rapport à la face inférieure du bras de pelle 10a. Le circuit hydraulique de la pelle est en outre commandé automatiquement pour que le godet 18 vienne prendre une position bien déterminée par rapport au bras 10a, position telle qu'illustrée sur la figure 1. On assure ainsi la reproductibilité de la mesure.

Dans le même temps ou par la suite, le bras 110 est descendu à l'aide du vérin 140, et le vérin 166 poursuit son mouvement pour faire descendre la sonde 120. Ce mouvement est effectué jusqu'à ce que cette dernière puisse osciller librement, selon un mouvement pendulaire, autour de l'articulation 176, et lorsque la sonde est stabilisée, le détecteur 122 occupe une position déterminée et invariable par rapport au godet 18. Par exemple, l'ensemble du dispositif peut être dimensionné ou réglé pour que le détecteur soit situé à une courte distance au-dessus du sommet de la charge contenue dans le godet.

Le conducteur de l'engin déclenche alors le système de comptage de la radioactivité, situé de préférence dans la cabine, pendant une durée bien déterminée, par exemple de 5 secondes.

Le comptage étant terminé, le conducteur, ainsi qu'éventuellement l'échantillonneur, peut visualiser la mesure de la radioactivité du minerai contenu dans le godet et donc affecter celui-ci à une catégorie donnée et entreprendre l'action nécessaire (chargement dans une benne de camion déterminée, rejet, etc...).

Le pelliste actionne alors un interrupteur de remontée. Simultanément ou de façon séparée dans le temps, les vérins 166 et 140 commandant les mouvements de la sonde par rapport au bras 110 et les mouvements dudit bras par rapport au bras de pelle 10a sont actionnnés, de manière à respectivement replier la sonde contre son bras 110 et à replier ce dernier contre le bras de pelle.

L'ensemble du dispositif va ainsi prendre la position représentée en tiretés sur la figure 1 (position haute), où le système d'accrochage précédemment décrit va entrer en jeu pour assurer la fixation sûre du dispositif dans cette position.

On peut noter que le dispositif occupe alors un encombrement tout à fait minime le long de la surface inférieure du bras 10a et ne gêne aucunement les mouvements ultérieurs de la pelle pour l'évacuation de la charge du godet et la prise d'une nouvelle charge. En outre, le dispositif est dans cette position relativement bien protégé.

Bien entendu, de nombreuse variantes peuvent être apportées à l'invention décrite, ceci sans sortir de son cadre.

Par exemple, afin d'atténuer au maximum les chocs impartis au dispositif de mesure, on peut prévoir au niveau du montage de celui-ci sur la surface inférieure du bras de la pelle (entre la plaque 139 et la surface 11) des coussinets amortisseurs en caoutchouc ou analogue. De même, une plaque de caoutchouc ou analogue, comme indiqué en 190 sur la figure 7, peut être prévue à la surface inférieure du bras 10a là où l'extrémité libre du bras 110 vient s'accrocher en position haute à l'aide du dispositif d'accrochage. De cette manière, les divers chocs impartis au bras de pelle pendant le travail de la pelle sont dans la mesure du possible amortis par cette plaque et ne sont donc pas transmis au détecteur.

De plus, on peut prévoir au sein du tube 121 un ou plusieurs poids qui, en venant modifier le poids et le centre de gravité de la sonde 120, en modifient également comme souhaité le comportement pendulaire.

Par ailleurs, le détecteur radiométrique 122, outre qu'il peut être d'un type quelconque, peut être complété par tout dispositif connu, par exemple par des écrans ou collimateurs destinés à modifier l'angle solide qu'il couvre afin de l'adapter aux dimensions de la charge contenue dans le godet.

Il est clair que l'invention de se limite pas à la mesure de radioactivité de charges de godets appartenant à des pelles rétro. Et l'homme de l'art saura effectuer les adaptations nécessaires pour incorporer le dispositif de mesure de la présente invention à tout autre engin susceptible de retenir, dans un godet ou autre, une charge de minerai extrait, par exemple à une chargeuse.

Enfin l'invention, si elle s'applique avantageusement à l'extraction dans des carrières d'uranium, peut bien entendu être appliquée à l'exploitation de tout minerai pouvant être catégorisé par mesure d'un rayonnement radioactif émis par celui-ci.

A cet égard, le dispositif selon la présente invention peut se présenter soit sous forme d'une unité autonome pouvant être rapportée de façon amovible sur un type d'engin donné, soit encore sous forme d'une unité intégrée à l'engin à titre optionnel lors de sa construction.

## Revendications

1. Engin d'extraction de minerai radioactif comprenant au moins un récipient (18) mobile apte à contenir une charge de minerai, caractérisé en ce qu'il comprend un dispositif de mesure de radioactivité comprenant une tige (120) articulée sur l'engin à son extrémité supérieure selon une liaison pendulaire dans au moins un plan vertical et comportant à son extrémité inférieure un détecteur de rayonnement radioactif (122) couvrant un angle solide déterminé, et des moyens de déplacement (140, 166) pour amener la tige et le récipient, de façon reproductible, dans une position mutuelle telle que la charge de minerai contenue dans le récipient occupe une partie substantielle de l'angle solide du détecteur.

2. Engin selon la revendication 1, caractérisé en ce que le détecteur (122) est un détecteur de rayonnement γ.

3. Engin selon la revendication 2, caractérisé en ce que le détecteur (122) est choisi dans le groupe comprenant les compteurs Geiger-Müller et les scintillateurs à monocristal minéral.

4. Engin selon l'une des revendications 1 à 3, caractérisé en ce qu'il comprend en outre un bras (110) monté pivotant sur l'engin par une extrémité et à l'autre extrémité duquel la tige (120) est articulée.

5. Engin selon la revendication 4, caractérisé en ce que son bras (110) est monté sur la surface inférieure d'un bras principal (10a) de l'engin prévu pour déplacer le récipient (18).

6. Engin selon la revendication 5, caractérisé en ce que les moyens de déplacement (140, 166) sont prévus pour déplacer le bras (110) et la tige (120) entre une position de rangement, dans laquelle la tige est repliée contre le bras et le bras est replié contre la surface inférieure du bras principal (10a) de l'engin, et une position d'utilisation, dans laquelle le bras du dispositif fait un angle déterminé par rapport au bras principal de l'engin et la tige pend librement dans ledit plan vertical.

7. Engin selon la revendication 6, caractérisé en ce que les moyens de déplacement comprennent un premier vérin (140) agissant entre l'engin et le bras (110) du dispositif et un second vérin (166) agissant entre ledit bras et la tige (120).

8. Engin selon l'une des revendications 6 et 7, caractérisé en ce que ledit plan vertical constitue également le plan dans lequel le bras (110) du dispositif peut pivoter.

9. Engin selon l'une des revendications 7 et 8, caractérisé en ce qu'il comprend également des moyens de verrouillage mécanique (178, 180) du bras et de la tige dans la position de rangement.

10. Engin selon l'une des revendications 7 à 9, caractérisé en ce qu'il comprend des moyens de réglage (146, 152) de la position angulaire du bras (110) du dispositif dans les positions de rangement et d'utilisation, respectivement.

11. Engin selon l'une des revendications 4 à 10, caractérisé en ce que le bras (110) du dispositif comporte à son extrémité côté tige un prolongement téléscopique (111) sur lequel est montée l'articulation (176) de ladite tige.

12. Engin selon l'une des revendications 7 à 11, caractérisé en ce que la tige est montée sur son articulation par l'intermédiaire d'une pièce de liaison (123) et en ce que les moyens de déplacement comprennent, en association avec le second vérin, (166) une plaque de retenue pivotante (182) qui est en liaison fonctionnelle avec ladite pièce seulement pendant les phases de transition du dispositif entre ses positions de rangement et d'utilisation.

13. Engin selon la revendication 9, caractérisé en ce que les moyens de verrouillage mécanique (178, 180) sont commandés par le second vérin (166).

14. Engin selon l'une des revendications précédentes, caractérisé en ce que les moyens de déplacement comprennent les moyens prévus sur l'engin pour déplacer son récipient.

15. Engin selon l'une des revendications 1 à 14, caractérisé en ce qu'il consiste en une pelle à godet de type rétro, le récipient étant constitué par le godet (18).

## Claims

1. Fördermaschine für radioaktive Erze mit wenigstens einem beweglichen Behälter, der eine Erzladung aufnehmen kann, dadurch gekennzeichnet, daß sie eine Einrichtung zum Messen der Radioaktivität, die eine Stange (120) aufweist, die an ihrem oberen Ende nach Art einer in wenigstens einer vertikalen Ebene pendelnden Verbindung an die Maschine angelenkt ist und an ihrem unteren Ende einen Detektor für radioaktive Strahlung (122) aufweist, der einen bestimmten Raumwinkel abdeckt, und Versetzungseinrichtungen (140, 166) zum reproduzierbaren Einstellen des Behälters und der Stange in einer derartigen gegenseitigen Position aufweist, daß die Erzladung, die im Behälter enthalten ist, einen wesentlichen Teil des Raumwinkels des Detektors einnimmt.

2. Maschine nach Anspruch 1 dadurch gekennzeichnet, daß der Detektor (122) ein Gammastrahlungsdetektor ist.

3. Maschine nach Anspruch 2 dadurch gekennzeichnet, daß der Detektor (122) aus einer Gruppe gewählt ist, die Geiger-Müller-Zähler und Mineraleinkristall-Scintillationszähler umfaßt.

4. Maschine nach einem der Ansprüche 1 bis 3 dadurch gekennzeichnet, daß sie weiterhin einen Arm (110) umfaßt, der an einem Ende schwenkbar an der Maschine angebracht ist und an dessen anderes Ende die Stange (120) angelenkt ist.

5. Maschine nach Anspruch 4 dadurch gekennzeichnet, daß der Arm (110) an der Unterfläche eines Hauptarms (10a) der Maschine angebracht ist, der dazu dient, den Behälter (18) zu bewegen.

6. Maschine nach Anspruch 5 dadurch gekennzeichnet, daß die Versetzungseinrichtungen (140, 166) dazu vorgesehen sind, den Arm (110) und die Stange (120) zwischen einer Ablageposition, in der die Stange gegen den Arm zurückgelegt ist und der Arm gegen die Unterfläche des Hauptarmes (10a) der Maschine zurückgelegt ist, und einer Arbeitsposition zu versetzen, in der der Arm der Einrichtung einen bestimmten Winkel bezüglich des Hauptarmes der Maschine einschließt und die Stange frei in der vertikalen Ebene hängt.

7. Maschine nach Anspruch 6 dadurch gekennzeichnet, daß die Versetzungseinrichtungen einen ersten Hubzylinder (140), der zwischen der Maschine und dem Arm (110) der Einrichtung wirkt, und einen zweiten Hubzylinder (166) umfassen, der zwischen dem Arm und der Stange (120) wirkt.

8. Maschine nach einem der Ansprüche 6 und 7 dadurch gekennzeichnet, daß die vertikale Ebene gleichfalls die Ebene bildet, in der der Arm (110) der Einrichtung schwenken kann.

9. Maschine nach einem der Ansprüche 7 und 8 dadurch gekennzeichnet, daß sie gleichfalls mechanische Verriegelungseinrichtungen (178, 180) für den Arm und die Stange in der Ablageposition umfaßt.

10. Maschine nach einem der Ansprüche 7 bis 9 dadurch gekennzeichnet, daß sie gleichfalls Stelleinrichtungen (146, 152) für die Winkelposition des Armes (110) der Einrichtung in den Arbeits- und Ablagepositionen jeweils umfaßt.

11. Maschine nach einem der Ansprüche 4 bis 10 dadurch gekennzeichnet, daß der Arm (110) der Einrichtung an seinem stangenseitigen Ende eine teleskopartiges Verlängerung (111) aufweist, an der das Gelenk (176) der Stange angebracht ist.

12. Maschine nach einem der Ansprüche 7 bis 11 dadurch gekennzeichnet, daß die Stange an ihrem Gelenk über ein Verbindungsstück (123) angebracht ist und daß die Versetzungseinrichtungen in Verbindung mit dem zweiten Hubzylinder (166) eine schwenkbare Übertragungsplatte (182) umfassen, die in Funktionsverbindung mit dem einen Stück während der Übergangsphasen der Einrichtung zwischen der Anlage- und der Arbeitsposition steht.

13. Maschine nach Anspruch 9 dadurch gekennzeichnet, daß die mechanischen Verriegelungseinrichtungen (178, 180) vom zweiten Hubzylinder (166) angesteuert werden.

14. Maschine nach einem der vorhergehenden Ansprüche dadurch gekennzeichnet, daß die Versetzungseinrichtungen diejenigen Einrichtungen umfassen, die an der Maschine zum Bewegen ihres Behälters vorgesehen sind.

15. Maschine nach einem der Ansprüche 1 bis 14 dadurch gekennzeichnet, daß sie aus einem Schaufelbagger vom Retrotyp besteht, dessen Behälter aus der Schaufel (18) besteht.

## Patentansprüche

1. A machine for use in the extraction of radioactive ore and including at least one moving receptacle (18) suitable for containing a load of ore, the device being characterized in that it comprises a device for measuring radioactivity comprising a rod (120) having its top end hinged to the machine in such a manner as to leave the rod free to swing in at least one vertical plane, the bottom end of the rod having a radioactive radiation detector (122) covering a determined solid angle, the device further including displacement means (140, 166) for bringing the rod and the receptacle in reproducible manner into a mutual disposition such that the load of ore contained in the receptacle occupies a substantial portion of the solid angle of the detector.

2. A machine according to claim 1, characterized in that the detector (122) is a gamma radiation detector.

3. A machine according to claim 2, characterized in that the detector (122) is selected from the group constituted by: Geiger-Muller counters; and mineral monocrystal scintillators.

4. A machine according to any one of claims 1 to 3, characterized in that it further includes an arm (110) pivotally mounted at one end on the machine and having the rod (120) hinged to its other end.

5. A machine according to claim 4, characterized in that the arm (110) is mounted on the bottom surface of a boom (10a) provided on the machine for displacing the receptacle (18).

6. A machine according to claim 5, characterized in that the displacement means (140, 160) are provided for displacing the arm (110) and the rod (120) between a stowed position in which the rod is folded against the arm and the arm is folded against the bottom surface of the boom (10a) of the machine, and a utilization position in which the arm is at a determined angle relative to the boom, and the rod hangs freely in said vertical plane.

7. A machine according to claim 6, characterized in that the displacement means comprise a first actuator (140) acting between the machine and the arm (110), and a second actuator (166) acting between said arm and the rod (120).

8. A machine according to claim 6 or 7, characterized in that the said vertical plane also constitutes the plane in which the arm (110) is pivotally mounted.

9. A machine according to claim 7 or 8, characterized in that it also includes mechanical locking means (178, 180) for locking the arm and the rod in the stowed position.

10. A machine according to any one of claims 7 to 9, characterized in that it includes adjustment means (146, 152) for adjusting the angular position of the arm in its stowed position and its utilization position, respectively.

11. A machine according to any one of claims 4 to 10, characterized in that the arm (110) has a telescopic extension (111) at its rod end with the hinge (176) of said rod being mounted thereon.

12. A machine according to any one of claims 7 to 11, characterized in that the rod is mounted on its hinge via an assembly piece (123), and in that the displacement means comprise, in association with the second actuator (166), a pivoting retention plate (182) which functionally engages said part only during the transition stages of the device between its stowed and utilization positions.

13. A machine according to claim 9, characterized in that the mechanical locking means (178, 180) are controlled by the second actuator (166).

14. A machine according to preceding claim, characterized in that the displacement means include the means provided on the machine for displacing its receptacle.

15. A machine according to any one of claims 1 to 14, characterized in that it is constituted by a mechanical digger, with the receptacle being constituted by the bucket (18).
